# EUROPEAN PATENT APPLICATION

(11) **EP 3 739 303 A1**
(43) Date of publication of application: **18.11.2020**
(21) Application number: 19382394.5
(22) Date of filing: 17.05.2019
(51) Int. Cl.: G01F 23/00, G01F 23/26, H02J 50/10, G01N 29/24, G01K 1/02

(54) **WIRELESS MEASUREMENT SYSTEM FOR AN AICRAFT**

(71) Applicant: Airbus Defence and Space, S.A.U., 28906 Getafe - Madrid (ES)
(72) Inventor: SÁNCHEZ-QUIÑONES CUBILLO, Luis Daniel, E-28906 Getafe, Madrid (ES)
(74) Representative: ABG Intellectual Property Law, S.L.

(57) **Abstract**

The present invention provides a wireless measurement system for an aircraft, the system comprising: at least one transceiver module, and at least one sensing module, the at least one transceiver module comprising: an electromagnetic inducer configured to generate an electromagnetic field for powering the at least one sensing module, a controller configured to receive a wireless signal from the at least one sensing module; and the at least one sensing module comprising: an electromagnetic receiver configured to power at least part of the sensing module upon reception of the electromagnetic field from the electromagnetic inducer of the at least one transceiver module, and sensing means configured to measure at least one parameter of a fluid, wherein the at least one sensing module is configured to emit a measurement measured by the sensing means by a wireless signal to the controller of the at least one transceiver module.

## Description

### TECHNICAL FIELD OF THE INVENTION

The present invention belongs to the field of measurement technology, in particular to the field of wireless measurement technology by induction powered systems for measuring properties of a fluid contained in a closed region with difficult access to the inside of the same. More specifically, the invention is of the special application in the aeronautic industry for measuring parameters of a fluid contained in a region or compartment closed by a physical frontier or wall. Particularly, the present invention provides a wireless measurement system for an aircraft on-board fuel tank, or pressure bulkheads, or aircraft firewalls; as well as a method for wireless measuring at least a parameter of a fluid contained in a closed region of the aircraft.

### BACKGROUND OF THE INVENTION

In the aeronautic industry, there are several closed compartments or regions of an aircraft, in which the fluid contained within is subjected to be measured in order to determine parameters or properties of these contained fluids necessary for aircraft safety and control.

One of these aircraft on-board closed regions is a fuel tank that is located within the aircraft. Accordingly, the fuel tank is understood as a closed region which may comprise in its interior fuel as a fluid. The measurement of the fuel inside the fuel tank is performed by in-tank electronic sensing technology that is electrically powered from outside the tank.

Due to the certification requirement of an aircraft fuel tank, a very low power can be driven inside any environment in which fuel is housed. That is, there is a need of using electrical measuring devices able to work with very low electrical power.

Currently, the known in-tank equipment technology is based on traditional electrical powering via harness and connectors. However, the electrical installation of these systems triggers noise, interferences and power decays. The measurement accuracy is therefore not optimal.

Furthermore, the bolts and electrical connectors of these systems can become loose due to vibration and aging of its installation. Therefore, fixing or replacing an in-tank sensor or connection of these systems increases the maintenance operations, in terms of costs and time, as fuel tanks must be empty and ventilated and the compartment or room is tight. Hence, the less the equipment or installation requires maintenance, the better for the measuring of the fuel parameters.

On the other hand, these electrical systems imply the provision of electrical harness penetration into the fuel tank through the tank walls. This penetration into the fuel tank, to avoid leakages, is also time and cost intensive.

Therefore, in view of the drawbacks of the known electrical systems, the present invention provides a non-invasive improved solution for measuring properties of the fuel contained in an aircraft fuel tank by a wireless measurement system by means of induction.

### SUMMARY OF THE INVENTION

The present invention provides a solution for the aforementioned problems, by a wireless measurement system according to claim 1, a method for wireless measuring according to claim 11, and an aircraft according to claim 12.

In a first inventive aspect, the invention provides a wireless measurement system for an aircraft, the system comprising:
- at least one transceiver module, and
- at least one sensing module,
the at least one transceiver module comprising:
- an electromagnetic inducer configured to generate an electromagnetic field for powering the at least one sensing module,
- a controller configured to receive a wireless signal from the at least one sensing module; and
the at least one sensing module comprising:
- an electromagnetic receiver configured to power at least part of the sensing module upon reception of the electromagnetic field from the electromagnetic inducer of the at least one transceiver module, and
- sensing means configured to measure at least one parameter of a fluid,
wherein the at least one sensing module is configured to emit a measurement measured by the sensing means by a wireless signal to the controller of the at least one transceiver module.

Along this document, it will be understood that the at least one sensing module and the at least one transceiver module establish an electromagnetic connection. The at least one transceiver module generates an electromagnetic field which powers the at least one sensing module, whereas the at least one sensing module transmits a wireless signal to the at least one transceiver module, thus communicating with it. Accordingly, when referring to the way in which both modules interact, the term "in electromagnetic connection" will be used. Thus, the term "electromagnetic connection" encompasses powering the at least one sensing module by means of the electromagnetic field generated by the at least one transceiver module, as well as the transmission of information from the at least one sensing module to the at least one transceiver module.

Furthermore, it will be also understood that both modules are provided with electronic means adapted for establishing said electromagnetic connection. In particular, regarding the transmission of information between both modules, the at least one sensing module is provided with electronic means configured for transmitting a wireless signal, and the controller of the transceiver module is provided with electronic means configured for receiving said wireless signal. In a particular embodiment, said electronic means is an antenna.

Advantageously, as both modules are in electromagnetic connection, there is no need of physical connections between them, thus avoiding the presence of electrical wiring harnesses, bolts, or screws, which usually involves penetrating through the aircraft structures they are implemented in.

Therefore, the disadvantages associated with those elements are also avoided, such as the loosening of screws by vibration, and the harm caused to the structures by perforations which may damage their mechanical properties.

Also advantageously, the sensing module provides the controller within the transceiver module with direct measurements, which greatly increases system reliability, as the absence of wires and their respective electrical connections further reduces the disadvantageous effects associated with them. Some of these effects are strain effects, noise, electrical interferences and power decay.

In this sense, as no further electrical installation is needed for connecting both modules the present system is auto-checked, thus being possible to replace elements without need of tuning or connection ground test.

As the number of components is greatly reduced, the wireless measurement system is also provided with great robustness and intrinsic safety, as this reduction of components means lower risk of sources of failure.

In a particular embodiment, the sensing means of the sensing module comprise at least a sensor, preferably, an electrical sensor. This sensor will be selected regarding the aircraft structure wherein the present system is going to be implemented in, as well as the fluid parameter of interest to be measured. Therefore, said sensor can measure at least one of temperature, pressure, capacitance, density, permittivity, etc.

In a particular embodiment, the controller comprises processing means configured to process the wireless signal received from the at least one sensing module.

In a more particular embodiment, the at least one sensing module further comprises a processing unit configured to process the measured information and to translate said information into a digital coded signal, which can be further transmitted as a wireless signal to the controller.

Advantageously, a wireless measurement system with processing capabilities can process the measured information on its own, converting the wireless signal received from the sensing means into a data signal that can be further transmitted to external systems of the aircraft.

Also advantageously, processing the wireless signal and converting it into a data signal within the own wireless measurement system makes further transmission of said signal insusceptible to electrical power decay and corruption.

A wireless measurement system according to this embodiment is provided with greater flexibility and adaptability, as it will reduce dependence from external computers or processing units, minimizing connections with remote equipment, regardless of the structure in which the system is implemented.

The present system is suitable for measuring parameters of a fluid contained in an aircraft structure that is difficult to access inside. For instance, the system can be provided for measuring parameters of a fuel continued in a fuel tank, or pressure parameter of a fluid contained on the other side of a pressure bulkhead or other side of a firewall.

In a particular embodiment, both the transceiver module and the sensing module are configured to be fixed to an aircraft structure. In this sense, the connection or joint of both modules to said aircraft structure can be made by conventional methods such as welding, gluing, screwing, riveting or fastening. Therefore, a wireless measurement system according to the present invention is provided with more a more flexibility and simpler installation.

The transceiver module can be powered by any conventional power source adapted to the transceiver requirements. In a particular embodiment, the present system further comprises power supply means for powering the transceiver module.

In another particular embodiment, the transceiver module comprises batteries.

In another particular embodiment, the transceiver module is connected to an external AC power source.

In a particular embodiment, the at least one sensing module further comprises:
- a transducer for converting the measurement of the sensing means to a signal,
- a transmitter for emitting said signal and/or the status information to the controller of the transceiver module by a wireless signal.

In some embodiments, the at least one sensing module further comprises monitoring means configured to check status information of the at least one sensing module.

Advantageously, due to the reduced number of elements and connections of a wireless measurement system according to the present invention, the frequency and extent of maintenance operations is greatly reduced.

Furthermore, under operating conditions of a wireless measurement system according to the invention, only parts of the sensing module, such as the sensing means may be subjected to replacement in the event of wearing or failure.

Therefore, the sensing module according to the present invention comprise monitoring means configured to provide the controller of the transceiver module with information about the status of the sensing module so that the central processing units of the aircraft are aware of its integrity and performance, in case that any part of the sensing module needs to be replaced.

Accordingly, these self-checking capabilities reduce the uncertainty about the current status of the elements exposed to the fluid and in charge of the measure of any of the parameters of interest, providing the wireless measurement system with fast and simple troubleshooting, rendering in a great robustness. This also allows further reducing maintenance requirements, saving costs and time.

In a particular embodiment, the transceiver module further comprises at least one data bus configured to transmit the wireless signal received by the controller.

In a particular embodiment, the controller of the at least one transceiver module further comprises at least one antenna.

According to this particular embodiment, said at least on antenna, present in the transceiver module, is the electronic means configured for receiving the wireless signal comprising the measurements measured by the sensing means, said signal being emitted by the at least one sensing module, thus enabling communication between the at least one sensing module and the at least one transceiver module. In a further preferred embodiment, the antenna will be configured for receiving the wireless signal in the form of a radio frequency signal.

In a particular embodiment, both the electromagnetic inducer and the electromagnetic receiver each comprise at least one coil.

According to this particular embodiment, the electromagnetic inducer comprises a primary coil to induce an electromagnetic filed which will be in electromagnetic connection with a secondary coil in the electromagnetic receiver, thus generating electric power which in turn powers at least part of the sensing module.

Advantageously, both coils may include power conversion elements. The power conversion elements allow to use low levels of induction electromagnetic energy, while providing the sensing means with adequate power. This low induction energy level also allows to obtain a safe device, in particular when operating in environments with explosive fluids.

Also advantageously, both modules are provided with an improved design feasibility due to the flexibility of wireless based connections. Accordingly, the size and shape of the elements comprised within the modules can be designed to match the electrical power requirements. In particular, both coils can be designed regarding geometrical constraints desired such as the separation of modules, attachments or clearances, so that the minimum electrical power needed for operating the sensing module is met.

In a particular embodiment, the sensing module is installed within a fuel tank and no more than 20 µJ are induced into the tank when operating normally, and 160 µJ in case of failure.

In a particular embodiment, the wireless signal is a radio frequency signal.

The wireless measurement system can operate under different environmental conditions, depending on the structure it is implemented in. In this sense, as an example, a cargo hold tank (O2, fuel) is less exposed to external interferences than a wing tank or an external tank. Accordingly, it can be exposed to different electromagnetic sources that may have an impact in the electromagnetic connection established between both modules causing interferences.

Advantageously, the wireless measurement system can be tuned to work at different radio frequencies. Preferably, it can work in a range between 30 KHz to several GHz. In this line, in a particular embodiment, the wireless signal is a short range radio signal working at 433MHz. In a further particular embodiment, both modules communicate via Bluetooth, thus at a radio frequency around 2,4 GHz. Advantageously, the low energy requirements for both powering the sensing module and for transmitting the wireless signal reduce the risk of operating within an environment with flammable fluids.

In a particular embodiment, the at least one sensing module is coated at least partially by an anti-corrosion layer.

As the sensing module can be implemented in different environments wherein a parameter is wanted to be measured (e.g. a fuel tank), it can be exposed to moisture and/or chemical corrosion. In a particular embodiment, the anti-corrosion layer applied comprises an anti-corrosion varnish.

Advantageously, a sensing module according to this particular embodiment is protected against the different chemical agents that may reduce service life of the parts of the module. Therefore, maintenance of the parts affected of the system is reduced, as well as its replacements.

In a particular embodiment, at least part of the at least one sensing module is encapsulated within a moisture insulation sheath.

Depending from the subsystem or structure in which the wireless measurement system operates, each component of the present system, particularly the sensing module, is exposed to hazards of different nature. Therefore, it may be necessary to isolate at least part of the sensing module to prevent the wireless measurement system from experiencing unwanted changes in the performance characteristics of the sensing means, for example, those due to being in direct contact with fluids or chemical agents which may also cause corrosion.

Advantageously, the sensing module can be fully encapsulated due to the fact that no external wiring electrical harnesses are needed. Therefore, it enables the feasibility of designing closed and isolated sensing modules.

Therefore, according to this particular embodiment, the sensing module, which is the part of the present system exposed to the fluid of interest, can be protected by a sheath to operate regardless of the environment in which it is implemented, thus being protected against corrosion and external interference of the fluids present in the surrounding environment.

In a particular embodiment, the moisture insulation sheath is made at least partially of electrically insulating material.

Due to the number of avionics technologies implemented in an aircraft, operating at different ranges of frequencies, there can be unwanted noise and interferences that can affect the performance of some sensing means.

In a particular embodiment, the material comprises an electrically insulating polymer.

Advantageously, encapsulating said sensing means within a sheath made of electrically insulating material can prevent the performance of said sensing means from being altered by the surrounding electromagnetic interferences.

In a second inventive aspect, the invention provides a method for wireless measuring of at least a parameter of a fluid housed in a space closed by a wall by a wireless measurement system according to the first inventive aspect, the method comprising:
a) powering the at least one transceiver module,
b) generating an electromagnetic field by an electromagnetic inducer of the at least one transceiver module,
c) energizing the electromagnetic receiver by the electromagnetic field generated by the electromagnetic inducer for powering the at least one sensing module,
d) measuring at least a parameter of the fluid by sensing means of the at least one sensing module, and
e) emitting by the at least one sensing module to the controller of the at least one transceiver module the measurement measured by the sensing means by a wireless signal.

In a particular embodiment, the method further comprises the step of locating the at least one sensing module within the space closed by a wall.

In a particular embodiment, the method further comprises the step of locating the at least one transceiver module out of the space closed by the wall.

Advantageously, the wireless capabilities of both modules comprises in the present system provides great flexibility when being implemented in an aeronautical structure. In this sense, the sensing module can be relatively positioned within the space, closed by a wall, which houses a fluid taking into account the parameter of interest of said fluid subjected to be measured. Accordingly, the transceiver module positioning can be performed regarding the actual position of the sensing module, for establishing a better electromagnetic connection between both modules. Advantageously, this wireless capability also provides safer operating conditions. In this sense, in a particular embodiment, wherein the wireless measurement system is implemented in a fuel tank, where power restrictions are critical, both modules can be relatively positioned as close as possible to one another, being fixed to opposite sides of a wall. This way, the power required for establishing an electromagnetic connection is reduced. In another embodiment, the at least one sensing module is confined within a Halon gas bottle, configured as a floating module.

In a third inventive aspect, the invention provides an aircraft comprising:
- at least a space closed by a wall, and
- a wireless measurement system according to an embodiment of the first inventive aspect,
wherein the at least one sensing module of the wireless measurement system is arranged inside the space and the at least one transceiver module is arranged outside the space.

In an aircraft, there are several confined closed spaces, which may be pressurized and/or comprise flammable fluids. Therefore, tightness and resistance to fatigue are very restrictive design conditions in order to prevent the appearance of leakages or cracks.

Further, as it happens with most of the structures in an aircraft, it is desirable to avoid the presence of perforations, rivets and either mechanical or electrical connectors, which may have a negative impact in the mechanical properties of the structure. This may also affect the whole fabrication process, from the design point of view and the resources spent to the maintenance planning and scheduling.

Advantageously, aircraft structures provided with a wireless measure system according to the present invention avoid patterning perforations and connections for screwing sensing means thereon, as well as for the wiring electrical harnesses and assemblies. In the event of fixing any of the modules to the wall of the structure, the connection can be made by welding.

Also advantageously, the absence of said electrical harnesses and assemblies due to the wireless capabilities of the wireless measure system of the present invention make said system less susceptible to electromagnetic hazards.

In a particular embodiment, the aircraft comprises a fuel tank, wherein the inside of the fuel tank is the space, and a wall of the fuel tank is the wall.

As stated above, one of the certification requirements of a fuel tank is the prohibition of driving power above a certain threshold within a confined space wherein such a flammable fluid as fuel is present.

Advantageously, the energy need for wireless powering the sensing module and for stablishing connection between the sensing module and the transceiver module is very low. This, along with the absence of electrical harnesses, leads to an improvement in the safety conditions of the fuel tank.

Further advantageously, the use of a remotely energized sensing module, by magnetic fields, within the tank chamber itself, reduce the presence of additional perforations, thus helping to prevent the tank from hazardous leakages. Accordingly, a fuel tank with a wireless measure system according to an embodiment of the invention reduce the maintenance operations needed, thus saving costs and time.

Further, said maintenance operations are less invasive for aircraft structures. In an embodiment, the sensing means do not require maintenance, and can be simply replaced. Therefore, tank invasion by an operator can be prevented.

In a particular embodiment, the wall is a pressure bulkhead.

In an aircraft, the rear pressure bulkhead is a primary structure member which, along with the fuselage, provide a sealed pressure vessel and thus help to maintain pressure within the cabin, while protecting the aircraft from bursting due to the great pressure gradient.

Existing rear pressure bulkheads have a curved design, as spherical is the ideal shape to resist internal cabin pressure while satisfying the requirement of minimizing weight. Therefore, it is an aeronautical structure where one surface will undergo tension while the other surface will undergo compression simultaneously. When planning the layout of a rear pressure bulkheads, perforations and rivets will have more tensile strength. The high tensile stress locations will be critical from the fatigue crack initiation point of view. If the crack in a critical location goes unnoticed it could lead to a catastrophic failure of the airframe.

In order to detect abnormal pressure gradients or cabin depressurization, it is of utmost importance to monitor the pressure in the cabin. Therefore, an aircraft provided with a rear pressure bulkhead comprising a wireless measure system according to the first inventive aspect has an improved design flexibility due to the feasibility of designs without a mechanical interface for the sensing subsystems, what also renders in a better structural behaviour.

In a particular embodiment, the wall is a firewall.

In an aircraft, a firewall separates the engine compartment from any other region of the aircraft, such as the very own cabin, to protect said regions in the event of an engine fire. Therefore, it is of utmost importance to keep in check the environmental conditions of the space in which the engine is operating, specially pressure and temperature.

As it has been stated before, it is desirable to avoid the presence of perforations and either mechanical or electrical connectors. Therefore, when planning the layout of a firewall, it is desirable to reduce the number of openings therein.

Therefore, an aircraft provided with a firewall comprising a wireless measure system according to an embodiment of the first inventive aspect has an improved design flexibility due to the feasibility of designs without a mechanical interface for the sensing subsystems, what also renders in a better structural behaviour.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a perspective view of a wireless measurement system according to an embodiment of the present invention.
- Figure 2: This figure shows a cross sectional view of a wireless measurement system according to an embodiment of the present invention.
- Figure 3: This figure shows a cross sectional view of an aircraft fuel tank with a wireless measurement system according to an embodiment of the present invention.
- Figure 4: This figure shows an aircraft comprising a wireless measurement system.

### DETAILED DESCRIPTION OF THE INVENTION

### Wireless measurement system (1)

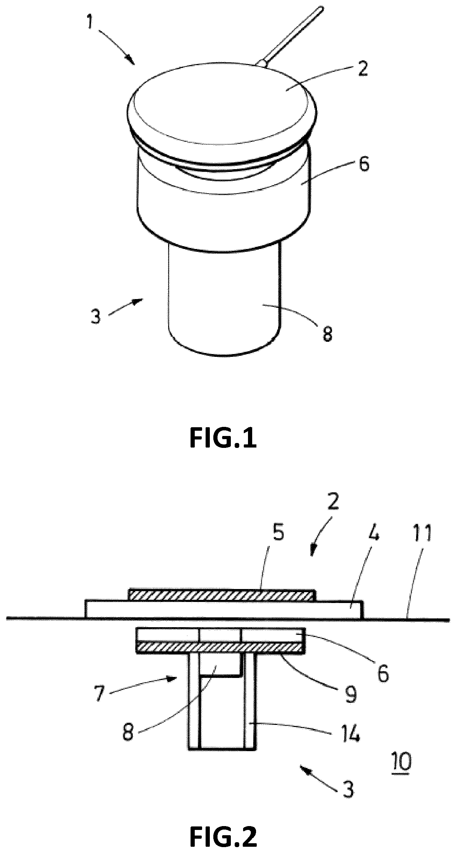

Figures 1 and 2 show respectively exemplary and schematic representations of an embodiment of the wireless measurement system (1) according to the present invention. In particular, both figures show a transceiver module (2) spaced apart from a sensing module (3), both modules (2, 3) being in electromagnetic connection in an operative configuration of the wireless measurement system (1) according to the present invention.

In figure 2, the transceiver module (2) is fixed to a wall (11) which defines a closed space (10), wherein the sensing module (3) is located.

For establishing electromagnetic connection, both modules (2, 3) are relatively positioned in such a way that the projection of both modules (2, 3) in a direction perpendicular to the wall (11) overlaps.

In other words, to allow an optimum electromagnetic connection, both modules (2, 3) are located in opposite sides of the wall (11), facing each other.

When the system (1) is in operational mode, the transceiver module (2) is powered so that it feeds the primary coil comprised within the transceiver module (2). In figure 1, the transceiver module (2) is powered by an external AC power source (not shown) through electrical wiring. Said primary coil of the transceiver module (2) generates an electromagnetic field.

Said electromagnetic field energizes the electromagnetic receiver (6), inducing currents in the secondary coil comprised within the sensing module (3), thus powering it. Therefore, the sensing means (7) are also powered and ready to carry out a measurement of a parameter of interest of a fluid housed within the closed space (10). Once said measurement is performed, a transducer (8) comprised in the sensing module (3) turns the measurement into a signal which is then emitted by a transmitter (9) as a wireless signal. In this particular embodiment, the wireless signal is a radio frequency signal.

The radio signal is then received by a controller (5) comprised in the transceiver module (2). Said controller (5) can be provided with processing means in order to turn the radio signal into a data signal. However, in this particular embodiment, the radio frequency signal is emitted by the controller (5) through a data bus (not shown) for further processing by an external computer in the aircraft.

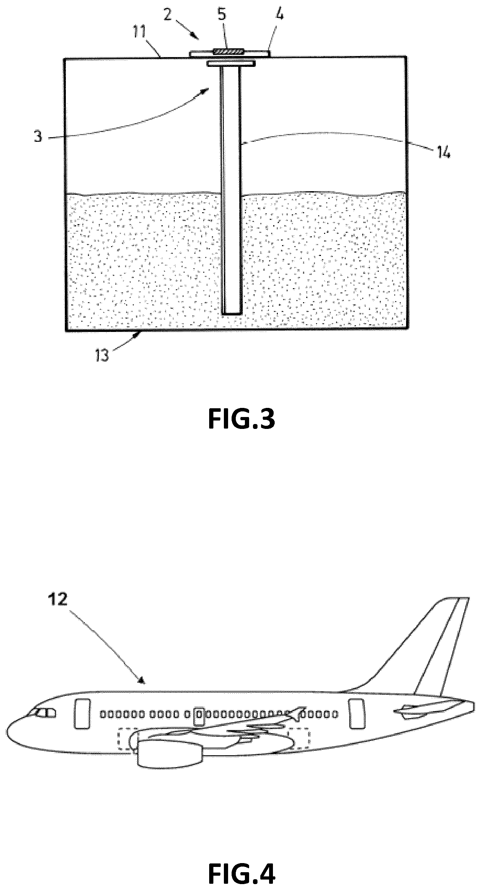

Figure 3 shows a particular embodiment of the wireless measurement system (1) shown in figure 2, installed in an aircraft fuel tank (13) with an upper wall (11). The dot stencil depicted represents the fuel comprised within the fuel tank (13). For this particular example, both modules (2, 3) are welded to the upper wall (11). Here, the sensing module (3) is located inside the fuel tank (13) and is in charge of measuring the level of fuel inside the fuel tank (13). For that purpose, the sensing means (7) of the sensing module (3) comprises a probe (14) extending from the upper wall (11) to the opposite wall of the fuel tank (13). The probe (14) leaves a gap between its distal end and said opposite wall for letting the fuel flow within the probe (14). In this particular example, the probe (14) is coated with a protecting varnish layer for protecting the sensing means (7) against humidity and corrosion due to being in contact with fuel. In another particular example, the probe (14) of the sensing module (3) is encapsulated within a sheath.

In a particular example, the sensing means (7) is a temperature sensor, or a densitometer, or liquid level sensor.

Figure 4 shows an aircraft (12) comprising a wireless measurement system (1) as shown in any previous figures. In particular, the wireless measurement system (1) is adapted to be arranged inside a space closed by a wall of an aeronautical structure of the aircraft (12), such as a fuel tank.

### Method for wireless measuring by a wireless measurement system (1)

The embodiments of the wireless measurement system (1) shown in figures 1-3 carry out a method for wireless measuring a parameter of a fluid housed within a space (10) closed by a wall (11).

In particular, the present method performs the following steps:
a) powering the at least one transceiver module (2),
b) generating an electromagnetic field by an electromagnetic inducer (4) of the at least one transceiver module (2),
c) energizing the electromagnetic receiver (6) by the electromagnetic field generated by the electromagnetic inducer (4) for powering the at least one sensing module (3),
d) measuring at least a parameter of the fluid by sensing means (7) of the at least one sensing module (3), and
e) emitting by the at least one sensing module (3) to the controller (5) of the at least one transceiver module (2) the measurement measured by the sensing means (7) by a wireless signal .

In a particular example, in the step a), the transceiver module (2) can be powered by an external A/C power source.

In the step b), the electromagnetic field generation is performed by the primary coil comprised within the transceiver module (2).

In the step c), the electromagnetic field generated by the primary coil of the transceiver module (2) induces currents in a secondary coil comprised within the sensing module (3).

In a particular example, in the step d), the sensing means (7) of the at least one sensing module (3) measures the level of fuel contained inside a fuel tank (13), according to figure 3.

## Claims

1. Wireless measurement system (1) for an aircraft (12), the system comprising:
• at least one transceiver module (2), and
• at least one sensing module (3),
the at least one transceiver module (2) comprising:
- an electromagnetic inducer (4) configured to generate an electromagnetic field for powering the at least one sensing module (3),
- a controller (5) configured to receive a wireless signal from the at least one sensing module (3); and
the at least one sensing module (3) comprising:
- an electromagnetic receiver (6) configured to power at least part of the sensing module (3) upon reception of the electromagnetic field from the electromagnetic inducer (4) of the at least one transceiver module (2), and
- sensing means (7) configured to measure at least one parameter of a fluid,
wherein the at least one sensing module (3) is configured to emit a measurement measured by the sensing means (7) by a wireless signal to the controller (5) of the at least one transceiver module (2).

2. The wireless measurement system (1) according to claim 1, wherein the at least one sensing module (3) further comprises:
- a transducer (8) for converting the measurement of the sensing means (7) to a signal,
- a transmitter (9) for emitting said signal to the controller (5) of the transceiver module (2) by a wireless signal.

3. The wireless measurement system (1) according to any of the previous claims, wherein the at least one sensing module (3) further comprises monitoring means configured to check status information of the at least one sensing module (3).

4. The wireless measurement system (1) according to any of the previous claims, wherein the transceiver module (2) further comprises at least one data bus configured to transmit the wireless signal received by the controller (5).

5. The wireless measurement system (1) according to any of the previous claims, wherein the controller (5) of the at least one transceiver module (2) further comprises at least one antenna.

6. The wireless measurement system (1) according to any of the previous claims, wherein both the electromagnetic inducer (4) and the electromagnetic receiver (6) each comprise at least one coil.

7. The wireless measurement system (1) according to any of the previous claims, wherein the wireless signal is a radio frequency signal.

8. The wireless measurement system (1) according to any of the previous claims, wherein the at least one sensing module (3) is coated at least partially by an anti-corrosion layer.

9. The wireless measurement system (1) according to any of the previous claims, wherein at least part of the at least one sensing module (3) is encapsulated within a moisture insulation sheath.

10. The wireless measurement system (1) according to claim 9, wherein the moisture insulation sheath is at least partially made of electrically insulating material.

11. Method for wireless measuring of at least a parameter of a fluid housed in a space(10) closed by a wall (11) by a wireless measurement system (1) according to any of claims 1-10, the method comprising:
a) powering the at least one transceiver module (2),
b) generating an electromagnetic field by an electromagnetic inducer (4) of the at least one transceiver module (2),
c) energizing the electromagnetic receiver (6) by the electromagnetic field generated by the electromagnetic inducer (4) for powering the at least one sensing module (3),
d) measuring at least a parameter of the fluid by sensing means (7) of the at least one sensing module (3), and
e) emitting a wireless signal by the at least one sensing module (3) to the controller (5) of the at least one transceiver module (2) comprising the measurement measured by the sensing means (7) .

12. Aircraft (12) comprising:
- at least a space (10) closed by a wall (11), and
- a wireless measurement system (1) according to any of claims 1-10,
wherein the at least one sensing module (3) of the wireless measurement system (1) is arranged inside the space (10) and the at least one transceiver module (2) is arranged outside the space (10).

13. Aircraft (12) according to claim 12, comprising a fuel tank (13) wherein the inside of the fuel tank (13) is the space (10) and a wall of the fuel tank (13) is the wall (11).

14. Aircraft (12) according to any of claims 12-13, wherein the wall (11) is a pressure bulkhead.

15. Aircraft (12) according to any of claims 12-14, wherein the wall (11) is a firewall.
